# EUROPEAN PATENT APPLICATION

(11) **EP 2 857 189 A1**
(43) Date of publication of application: **08.04.2015**
(21) Application number: 13197250.7
(22) Date of filing: 13.12.2013
(51) Int. Cl.: B32B 5/02, D06M 15/00

(54) **Reshapable ventilating fabric structure and assembly thereof**

(30) Priority: 04.10.2013 TW 102136127
(71) Applicant: Jade Long John Enterprise Co., Ltd, Taiwan (TW)
(72) Inventor: Wen, Wen-Tsao, She-Tou, Chang-Hwa Taiwan (TW)
(74) Representative: Michalski Hüttermann & Partner Patentanwälte mbB

(57) **Abstract**

The present invention discloses a reshapable ventilating fabric structure and assembly thereof. The reshapable ventilating fabric structure comprises a three-dimensional ventilating sheet and thermoplastic material. The three-dimensional ventilating sheet comprises two ventilating outer layers. The two ventilating outer layers have a plurality of pores. The thermoplastic material is furnished on sidewalls of the plurality of pores in one of the ventilating outer layers.

## Description

### CROSS-REFERENCE TO RELATED APPLICATION

This application claims priority from Taiwan Patent Application No. 102136127, filed on October 4, 2013 in Taiwan Intellectual Property Office, the contents of which are hereby incorporated by reference in their entirety.

### BACKGROUND OF THE INVENTION

### 1. Field of the Invention

The present invention is related to a ventilating fabric, and particularly related to a reshapable ventilating fabric structure and assembly thereof which can be reshaped repeatedly and have better ventilation.

### 2. Description of the Related Art

With the progressive advances of textiles and the related industry, various textile products and textile related products are developed constantly and gradually applied to our daily life.

Among the manufacturing methods of textile products, generally speaking, traditional weaving are usually applied to provide the fabric with a ventilating air layer, if the fabric is desired to have the ventilation effect. The weaving methods of prior arts are based on laminated layers, their structures are generally created by interweaving the warp and the weft. The present weaving methods are classified as: three-dimensional weaving, woven fabric weaving, warp knitted fabric weaving, and weft knitted fabric weaving, and the basic principle is to intercalate a core layer into two surface layers to form a fabric having a ventilating air layer. Post-processing processes are required to make the fabric rigid or reshapable. In prior arts, the post-processing processes mentioned above include dipping or spreading coating reshapable material, or interweaving fabric with thermoplastic material, etc., to form the fabric with plasticity.

Besides, textile products are widely utilized to various applications. For example, a female bra is designed to beautify woman's breasts. The main structure of a female bra basically includes a pair of cups, the corresponding back straps, and the corresponding shoulder straps. The cup structure of conventional bras is basically to intercalate an intermediate foam pad or cotton pad between a front fabric layer and a back fabric layer to form a shape of convex front and concave back, and further selectively sew the superficial fabric. However, the form pads of ordinary cup structures are made of polyurethanes (PU), polyvinyl alcohol (PVA), or the mixture of the above two. Even though both the two foams are thermoplastic, the elasticity is not ideal and the ventilation is not good. Therefore, women wearing this kind of bras too long will suffer from the problems of muggy skin, irritability, discomfort, etc..

Furthermore, the manufacturing method of conventional reshapable fabric by soaking thermoplastic material tends to make the fabric to be stiff and ill ventilating. Technically, it is impossible to control a coating method such that the thermoplastic material can be uniformly distributed on fabric, and coating tends to block the pores of fabric to cause ill ventilation. Technically, it is impossible to control a coating method such that the thermoplastic material can be uniformly distributed on fabric, and coating tends to clog the pores of fabric to cause ill ventilation. Therefore, extra mechanical perforations must be performed on the fabric after the coating process. The perforation process will destroy the interweaving structure of warp and weft, such that the properties of ventilation, moisture absorption, touch feeling, etc., of the fabric will be damaged to be reduced or lost. Moreover, interweaving thermoplastic material with fabric can provide merely limited plasticity. Based on the problems of prior arts, therefore, a single-process fabric structure having a single face furnished with thermoplastic material is disclosed in the present invention to preserve the integrity of the pores on the fabric, so as to improve the ill ventilation and limited plasticity problems of the reshapable fabric or the single-layer fabric, to further replace the plastic foam layer in the fabric, and to increase the applications of the present structure.

### SUMMARY OF THE INVENTION

According to the problem of prior arts, one of the purpose of the present invention is to provide a reshapable ventilating fabric structure and assembly thereof, which is constructed by dipping or rotary coating thermoplastic material on a single surface of a direct-weaving ventilating fabric, such that the thermoplastic material is attached to the sidewalls of a plurality of pores of the ventilating fabric. In this manner, the plurality of pores of the fabric can be preserved from clogging by the thermoplastic material, so as to solve the problems of ill ventilation and limited plasticity of the conventional reshapable fabric.

Based on the purpose of the present invention, a reshapable ventilating structure is disclosed, including a three-dimensional ventilating sheet which is a flexible and three-dimensional ventilating slice body produced in a single process, and the three-dimensional ventilating sheet includes two ventilating outer layers having a plurality of pores; and thermoplastic material which is attached on the sidewalls of the plurality of pores of one of the three-dimensional ventilating sheet.

Preferably, the three-dimensional ventilating sheet further includes an intermediate fabric layer located between the two ventilating outer layers, and the thermoplastic material is furnished on part of the intermediate fabric layer via the plurality of pores.

Preferably, the thermoplastic material includes polyester (PET), thermoplastic polyurethanes (TPU), polyethylene (PE), polypropylene (PP), polyvinylchloride (PVC), ethylene vinyl acetate (EVA), or nylon.

Preferably, the thermoplastic material is furnished on the sidewalls of the plurality of pores of one of the ventilating outer layers of the three-dimensional ventilating sheet by dipping or rotary coating.

Based on the purpose of the present invention, a reshapable ventilating fabric structure is further disclosed, including a single-layered ventilating netting having a plurality of pores; and thermoplastic material, being furnished on sidewalls of the plurality of pores of the three-dimensional ventilating netting.

Preferably, the thermoplastic material includes polyester (PET), thermoplastic polyurethanes (TPU), polyethylene (PE), polypropylene (PP), polyvinylchloride (PVC), ethylene vinyl acetate (EVA), or nylon.

Preferably, the thermoplastic material is furnished on the sidewalls of the plurality of pores of the three-dimensional ventilating netting by dipping or rotary coating.

Based on the purpose of the present invention, a reshapable ventilating fabric structure is disclosed once more, including a first reshapable ventilating structure and a second reshapable ventilating structure. The first reshapable ventilating structure includes a first three-dimensional ventilating sheet which is a flexible and three-dimensional ventilating slice body produced in a single process, the first three-dimensional ventilating sheet having two first ventilating outer layers, and the two first ventilating outer layers having a plurality of first pores. The first thermoplastic material is furnished on sidewalls of the plurality of the first pores of one of the first ventilating outer layers of the first three-dimensional ventilating sheet. The second reshapable ventilating structure includes a second three-dimensional ventilating sheet which is a flexible and three-dimensional ventilating slice body produced in a single process, the second three-dimensional ventilating sheet having two second ventilating outer layers, and the two second ventilating outer layers having a plurality of second pores. The second thermoplastic material is furnished on sidewalls of the plurality of the second pores of one of the second ventilating outer layers of the second three-dimensional ventilating sheet. Furthermore, the first three-dimensional ventilating outer layer furnished with the first thermoplastic material is connected to the second three-dimensional ventilating outer layer furnished with the second thermoplastic material.

Preferably, the first three-dimensional ventilating sheet further includes a first intermediate fabric layer located between the two first ventilating outer layers, and the first thermoplastic material is furnished on part of the first intermediate fabric layer via the plurality of pores.

Preferably, the second three-dimensional ventilating sheet further includes a second intermediate fabric layer located between the two second ventilating outer layers, and the second thermoplastic material is furnished on part of the second intermediate fabric layer via the plurality of pores.

Preferably, the first thermoplastic material is furnished on the sidewalls of the plurality of first pores of one of the first ventilating outer layers of the first three-dimensional ventilating sheet by dipping or rotary coating, and the second thermoplastic material is furnished on the sidewalls of the plurality of second pores of one of the second ventilating outer layers of the second three-dimensional ventilating sheet by dipping or rotary coating.

In summary, the reshapable ventilating fabric structure and assembly thereof of the present invention is constructed by attached the thermoplastic material upon the sidewalls of the plurality of pores of one of the ventilating outer layer or on the surface of the single-layer netting to provide repeatable thermoplasticity and preserve the plurality of pores from clogging by the thermoplastic material, so as to enhance the ventilation of the fabric.

### BRIEF DESCRIPTION OF THE DRAWINGS

FIG. 1 is a diagram showing a first embodiment according to a reshapable ventilating fabric structure of the present invention.
FIG. 2 is a bird's-eye view diagram showing the first embodiment according to the reshapable ventilating fabric structure of the present invention.
FIG. 3 is a diagram showing a second embodiment according to a reshapable ventilating fabric structure of the present invention.
FIG. 4 is a diagram showing a third embodiment according to a reshapable ventilating fabric structure of the present invention.

### DETAILED DESCRIPTION OF THE PREFERRED EMBODIMENTS

To illustrate the characteristics, content, and advantages of the present invention and the effects it can fulfill, a preferred embodiment and the corresponding drawings are provided to offer more detailed descriptions. The purpose of the drawings being used is for illustration and to assist the specifications, they are not necessarily the real proportion and precise allocations of the embodiments of the present invention. Thus, they should not be used to limit the privilege coverage of the practical embodiments of the present invention.

With reference to the drawings, thereafter, the preferred embodiments of the reshapable ventilating fabric structure and assembly thereof in accordance with the present invention are illustrated. In order to be understood easily, the same components in the following embodiments are labeled as the same numeral.

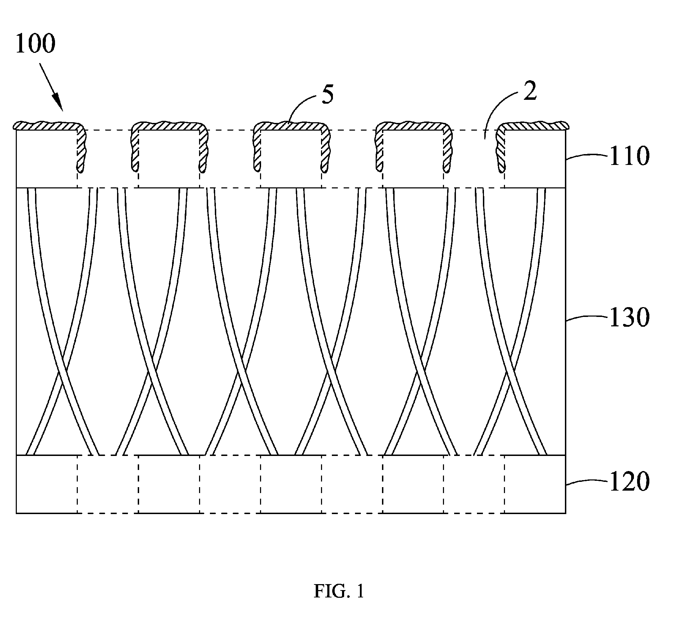

Referring to FIG. 1, FIG. 1 is a diagram showing a first embodiment according to a reshapable ventilating fabric structure of the present invention. In the present embodiment, the reshapable ventilating fabric structure includes a three-dimensional ventilating sheet 100 and thermoplastic material 5. The three-dimensional ventilating sheet 100 is a flexible and three-dimensional slice body. The three-dimensional ventilating sheet 100 further includes two ventilating outer layers 110, 120 and an intermediate fabric layer 130. The intermediate fabric layer 130 is located between the two ventilating outer layers 110. The two ventilating outer layers 110 and 120 have a plurality of pores 2.

Furthermore, the coating method of the thermoplastic material 5 of the present invention may include dipping, and the depth of the coating material infiltrated into the fabric will vary in accordance with the fabric been chosen. When the thermoplastic material 5 is dipping on the ventilating outer layers 110 and 120, therefore, the thermoplastic material 5 will infiltrate into the ventilating outer layers 110 and 120, and the ratio of the depth of the thermoplastic material 5 infiltrated into the ventilating outer layers 110 and 120 to the overall thickness of the fabric can be adjusted in accordance with requirements.

Furthermore, the coating method of the thermoplastic material 5 of the present invention may include rotary coating, in which a rotary is carved with different textures and glued with the thermoplastic material to perform the coating, and the amount of thermoplastic material 5 to be attached on the rotary depends on the different requirements for different fabrics. The textures of the glued carved rotary are used to carry an adequate amount of the thermoplastic material 5. A pressure roller is further included to provide adequate pressure to print the coating and assist the thermoplastic material 5 to transfer from the glued carved rotary to the fabric. The textures of the glued carved rotary are used to carry an adequate amount of the thermoplastic material 5. A pressure roller is further included to provide adequate pressure to perform the printing, and the thermoplastic material 5 is transferred from the glued carved rotary to the fabric. The textures of the glued carved rotary may change in accordance with the shape of the pores of the fabric, so as to provide uniform coating of the thermoplastic material 5 upon the ventilating outer layers 110 and 120.

The thermoplastic material 5 may include polyester (PET), thermoplastic polyurethanes (TPU), polyethylene (PE), polypropylene (PP), polyvinylchloride (PVC), ethylene vinyl acetate (EVA), or nylon, etc.. Furthermore, the plurality of pores 2 may be regularly or irregularly arranged, and the shapes of the plurality of pores 2 may be round, elliptical, or rectangle. The above are just exemplary embodiments, but not limited thereof.

In the above, the coating methods are applied to process the thermoplastic material upon the reshapable ventilating fabric structure in the first embodiment of the present invention. By using the coating methods, the aforementioned thermoplastic material 5 may be furnished on the sidewalls of the plurality of pores 2 on one of the ventilating outer layers 110 and 120 of the three-dimensional ventilating sheet 100. The thermoplastic material 5 is further furnished on part of the intermediate fabric layer 130 via the plurality of pores 2.

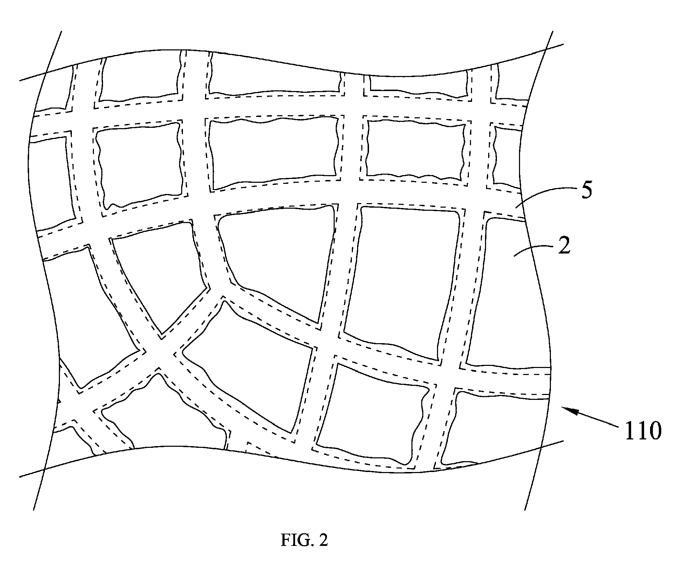

Referring to FIG. 2, FIG. 2 is a bird's-eye view diagram showing the first embodiment according to the reshapable ventilating fabric structure of the present invention. It can be observed in FIG. 2 that the thermoplastic material 5 is furnished on the sidewalls of the plurality of pores 2 of the ventilating outer layer 110 and does not clog the plurality of pores 2, and thus the ventilation of the fabric can be preserved.

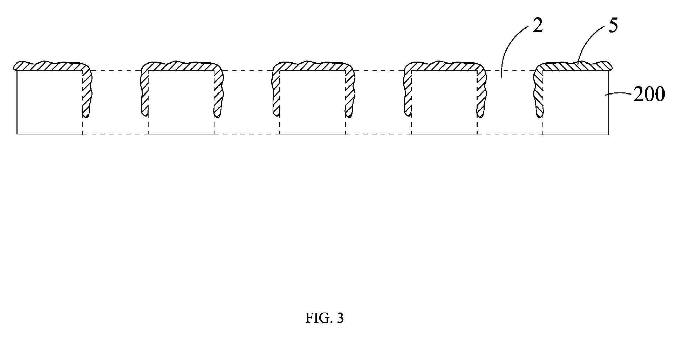

Referring to FIG. 3, FIG. 3 is a diagram showing a second embodiment according to a reshapable ventilating fabric structure of the present invention. In the second embodiment, the reshapable ventilating fabric structure includes a single-layered ventilating netting 200 and thermoplastic material 5. The single-layered ventilating netting 200 has a plurality of pores 2. The single-layered ventilating netting 200 may be any fabric with good ventilation, such as plain woven, knitted fabric, or nonwoven, etc., and the thermoplastic material 5 may be furnished on the sidewalls of the plurality of pores 5 of the single-layered netting 200. The thermoplastic material may includes polyester (PET), thermoplastic polyurethanes (TPU), polyethylene (PE), polypropylene (PP), polyvinylchloride (PVC), ethylene vinyl acetate (EVA), or nylon, etc.. The above is merely exemplary, but not limited thereof.

In the above, the range of the repeatable thermoplastic temperature of the thermoplastic finished products after the coating process may be from 60°C∼110 °C, and the finished products within the present temperature range can be reshaped repeatedly in accordance with users' requirement. The above is merely a preferred embodiment, but not limited thereof.

It is noteworthy to mention that the structures mentioned in the first embodiment and the second embodiment of the present invention can be applied to any fabric or product which needs to perform solidifying reshaping. For example, the reshapable ventilating fabric structure of the present invention can be applied to manufacture sport vamps or sport safety appliances, etc., so as to improve the ill ventilation and limited plasticity of the thermoplastic products produced by using conventional technology.

Generally speaking, a pair of good shoes must be artistic, and more importantly, comfortable fit. How to make shoes comfortable fit requires customized shoe shape manufacturing and good ventilation. Even though thermoset resin composite has been utilized to make shoes in the traditional shoe manufacturing method, however, coating or soaking is utilized to process the thermoset resin composite in the traditional shoe manufacturing method. Even though thermoset resin composite has been utilized to make shoes in the traditional shoe manufacturing method, however, coating or soaking is utilized to impose the thermoset resin composite in the traditional shoe manufacturing method. In this manner, the thermoset resin composite will clog the ventilating pores of the fabric and cause the shoes made by this method to have ill ventilation. When a user wears the present shoes for a long time, heat and moisture tend to accumulate inside the shoes and make the shoes the breeding ground of mold or bacteria. The present shortcomings will not only generate bothersome smells, but also tend to cause the feet of the user to have skin diseases, such as the athlete's foot. In the reshapable ventilating fabric structure of the present invention, therefore, dipping is applied to impose the thermoplastic material 5 upon the outer layer of any fabric having ventilating pores, such that the thermoplastic material 5 is furnished on the sidewalls of the plurality of pores 2 of the fabric. In this manner, the plurality of pores 2 will not be clogged by the thermoplastic material 5 and the integrity of the pores can be preserved. Therefore, the problems of prior arts can be improved, such that comfort and ventilation remain good after the user has long wearing the shoes. Therefore, the reshapable ventilating fabric structure of the present invention can be used to perform customized shoe shape manufacturing, and further provide better ventilation.

Besides, splints used in ordinary medical practices include many different kinds of material and types, such as gypsum, conformed plastic fixation component, metal, or rigid support, etc.. Gypsum related material is able to tightly wrap up wounded spots of human limbs, therefore it is the most common type. Since it takes long time for gypsum to solidify, the casting process of the gypsum fixation method is long and complex. Furthermore, gypsum splints are heavy and non-ventilating, thus the life convenience of a patient is seriously influenced by the gypsum splint. Due to the ill ventilation problem of gypsum splints, skin diseases may happen to users with sensitive skin and cause a second injury. Even though ordinary conformed plastic fixation component, metal, or rigid support are able to resolve the heavy weight problem of gypsum, most of them cannot provide good ventilation and the availability is questionable. For example, the mass of the aforementioned conformed plastic fixation component is relatively lighter, the conformed plastic fixation component offers little ventilation. Comparatively, the aforementioned metal support has relatively better ventilation, its protection effect is not good and it can merely cover a local scope. Consequently, the metal support cannot provide complete encapsulation and stably fix the wounded spot. Therefore, the reshapable ventilating fabric structure of the present invention may also be applied to replace the medical gypsum splint and used as the conformed splint, so as to fix and protect the wounded spots of injury limbs. Since the thermoplastic material in the reshapable ventilating fabric structure of the present invention do not clog the pores 2 of the three-dimensional ventilating sheet 100 or the single-layered ventilating netting 200, the ventilation is excellent. Furthermore, the present structure can be shaped in accordance with a user's requirement, it can also be repeatedly reshaped via heating. Therefore, the splint finished product is able to reach the objectives of light weight, ventilating, high support, and good conformity.

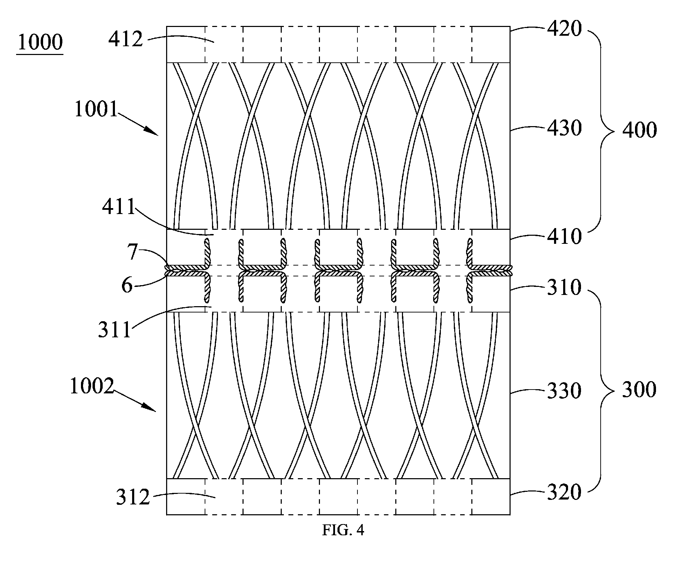

It is noteworthy to mention that the reshapable ventilating fabric structure by direct weaving of the first embodiment of the present invention can be further used to perform layered combination to form a reshapable fabric structure of soft outside and rigid inside, and then applied to female bras. Referring to FIG. 4 for the detailed structure, FIG. 4 is a diagram showing a third embodiment according to a reshapable ventilating fabric structure of the present invention. In the third embodiment the reshapable ventilating fabric assembly 1000 includes a first reshapable ventilating fabric structure 1001 and a second reshapable ventilating fabric structure 1002. The first reshapable ventilating fabric structure 1001 includes a first three-dimensional ventilating sheet 300 and first thermoplastic material 6. The first three-dimensional ventilating sheet 300 further includes two first ventilating outer layers 310, 320, and a first intermediate fabric layer 330. Each of the ventilating outer layer 310 and 320 includes a plurality of first pores 311 and 312, respectively. Similarly, the second reshapable ventilating fabric structure 1002 includes a second three-dimensional ventilating sheet 400 and second thermoplastic material 7. The second three-dimensional ventilating sheet 400 further includes two second ventilating outer layer 410, 420, and a second intermediate fabric layer 430. Each of the second ventilating outer layers 410 and 420 includes a plurality of second pores 411 and 412, respectively.

In the above, the first thermoplastic material 6 is furnished on the sidewalls of the plurality of the first pores 311 or 312 of one of the first ventilating outer layers 310 and 320 of the first three-dimensional ventilating sheet 300 via dipping. Similarly, the second thermoplastic material 7 is also furnished on the sidewalls of the second pores 411 or 412 of one of the second ventilating outer layer 410 and 420 of the second three-dimensional ventilating sheet 400 via dipping. The third embodiment is illustrated by furnishing the thermoplastic material 6 on the sidewalls of the plurality of the first pores 311 of the first ventilating outer layer 310 and the thermoplastic material 7 on the sidewalls of the plurality of the second pores 411 of the first ventilating outer layer 410. In the reshapable ventilating fabric assembly 1000 of the present invention, furthermore, the first ventilating outer layer 310 furnished with the first thermoplastic material 6 and the second ventilating outer layer 410 furnished with the second thermoplastic material 7 is connected to each other by heating to form a reshapable structure of soft outside and rigid inside.

Besides, the cup structure of conventional bras is basically to intercalate an intermediate foam pad or cotton pad between a front fabric layer and a back fabric layer to form a shape of convex front and concave back, and further selectively sew the superficial fabric. However, the form pads of ordinary cup structures are made of polyurethanes (PU), polyvinyl alcohol (PVA), or the mixture of the above two. Even though both the two foams are thermoplastic, the elasticity is not ideal enough and the ventilation is not good. Therefore, women wearing this kind of bras too long will have the problems of muggy skin, irritability, discomfort, etc.. By replacing the foam pad or the cotton pad with the reshapable ventilating fabric assembly of the present invention, therefore, it will not only improve the ill ventilation problem, but also enhance the comfort of wearing bras and the function of beautifying women's' breast shapes.

In the reshapable ventilating fabric structure and assembly thereof of the present invention, the thermoplastic material is furnished on the sidewalls of the plurality of pores of one of the ventilating outer layer or on the surface of the single-layer netting via dipping. In this manner, not only the repeatable thermoplasticity but also the pores of the fabric can be preserved, such that the process of mechanical perforation of prior arts can be omitted and the integrity of the fabric structure can be maintained. In this manner, the aforementioned structure of the present invention can further enhance ventilation, conformity, and comfort of the reshapable fabric or products, and thus the application areas of the aforementioned structure can be further enlarged.

The present invention has been described with reference to the foregoing preferred embodiments, it will be understood that the invention is not limited to the details thereof. Various equivalent variations and modifications may still occur to those skilled in this art in view of the teachings of the present invention. Thus, all such variations and equivalent modifications are also embraced within the scope of the invention as defined in the appended claims.

## Claims

1. A reshapable ventilating fabric structure, comprising:
a three-dimensional ventilating sheet (100), being a flexible and three-dimensional ventilating slice body produced in a single process, the three-dimensional ventilating sheet (100) comprising two ventilating outer layers (110,120), and both the two ventilating outer layers (110,120) comprising a plurality of pores (2); and
thermoplastic material (5), being furnished on sidewalls of the plurality of pores (2) of one of the ventilating outer layer (110,120) of the three-dimensional ventilating sheet (100).

2. The reshapable ventilating fabric structure of claim 1, wherein the reshapable ventilating fabric structure further comprises an intermediate fabric layer (130) located between the two ventilating outer layers (110,120), and the thermoplastic material (5) is furnished on part of the intermediate fabric layer (130) via the plurality of pores (2).

3. The reshapable ventilating fabric structure of claim 1, wherein the thermoplastic material (5) comprises polyester (PET), thermoplastic polyurethanes (TPU), polyethylene (PE), polypropylene (PP), polyvinylchloride (PVC), ethylene vinyl acetate (EVA), or nylon.

4. The reshapable ventilating fabric structure of claim 1, wherein the thermoplastic material (5) is furnished on the sidewalls of the plurality of pores (2) of one of the ventilating outer layers (110,120) of the three-dimensional ventilating sheet (100) by dipping or rotary coating.

5. A reshapable ventilating fabric structure, comprising:
a single-layered ventilating netting (200), comprising a plurality of pores (2); and
thermoplastic material (5), being furnished on sidewalls of the plurality of pores (2) of the single-layered ventilating netting (200).

6. The reshapable ventilating fabric structure of claim 5, wherein the thermoplastic material (5) comprises polyester (PET), thermoplastic polyurethanes (TPU), polyethylene (PE), polypropylene (PP), polyvinylchloride (PVC), ethylene vinyl acetate (EVA), or nylon.

7. The reshapable ventilating fabric structure of claim 5, wherein the thermoplastic material (5) is furnished on the sidewalls of the plurality of pores (2) of the single-layered ventilating netting (200) by dipping or rotary coating.

8. A reshapable ventilating fabric assembly , comprising:
a first reshapable ventilating structure (1001), comprising:
a first three-dimensional ventilating sheet (300), being a flexible, three-dimensional ventilating slice body produced in a single process, the first three-dimensional ventilating sheet (300) comprising two first ventilating outer layers (310,320), and the two first ventilating outer layers (310,320) comprising a plurality of first pores (311,312); and
first thermoplastic material (6), being furnished on sidewalls of the plurality of the first pores (311,312) of one of the first ventilating outer layers (310,320) of the first three-dimensional ventilating sheet (300); and
a second reshapable ventilating structure (1002), comprising:
a second three-dimensional ventilating sheet (400), being a flexible, three-dimensional ventilating slice body produced in a single process, the second three-dimensional ventilating sheet (400) comprising two second ventilating outer layers (410,420), and the two second ventilating outer layers (410,420) comprising a plurality of second pores (411,412); and
second thermoplastic material (7), being furnished on sidewalls of the plurality of the second pores (411,412) of one of the second ventilating outer layers (410,420) of the second three-dimensional ventilating sheet (400);
wherein the first ventilating outer layer (310,320) furnished with the first thermoplastic material (6) is connected to the second ventilating outer layer (410,420) furnished with the second thermoplastic material (7).

9. The reshapable ventilating fabric assembly of claim 8, wherein the first three-dimensional ventilating sheet (300) further comprises a first intermediate fabric layer (330) located between the two first ventilating outer layers (310,320), and the first thermoplastic material (6) is furnished on part of the first intermediate fabric layer (330) via the plurality of first pores (311,312).

10. The reshapable ventilating fabric assembly of claim 8, wherein the second three-dimensional ventilating sheet (400) further comprises a second intermediate fabric layer (430) located between the two second ventilating outer layers (410,420), and the second thermoplastic material (7) is furnished on part of the second intermediate fabric layer (430) via the plurality of second pores (411,412).

11. The reshapable ventilating fabric assembly of claim 8, wherein the first thermoplastic material (6) is furnished on the sidewalls of the plurality of first pores (311,312) of one of the first ventilating outer layers (310,320) of the first three-dimensional ventilating sheet (300) by dipping or rotary coating, and the second thermoplastic material (7) is furnished on the sidewalls of the plurality of second pores (411,412) of one of the second ventilating outer layers (410,420) of the second three-dimensional ventilating sheet (400) by dipping or rotary coating.
